# EUROPÄISCHE PATENTANMELDUNG

(11) **EP 0 882 630 A1**
(43) Veröffentlichungstag der Anmeldung: **09.12.1998**
(21) Anmeldenummer: 98110262.7
(22) Anmeldetag: 05.06.1998
(51) Int. Cl.: B60S 5/04, F16L 37/127

(54) **Steckanschlusselement für eine Einrichtung zur Befüllung von Luftreifen**

(30) Priorität: 06.06.1997 DE 19723985
(71) Anmelder: CompAir Mahle GmbH, 70736 Fellbach (DE)
(72) Erfinder: Gsell, Walter, 70188 Stuttgart (DE); Matschl, Manfred, 71563 Affalterbach (DE); Schumm, Elmar, 71711 Murr (DE); Zolldann, Wolf, 73773 Aichwald (DE)
(74) Vertreter: Patentanwalts-Partnerschaft Rotermund + Pfusch

(57) **Zusammenfassung**

Ein Steckanschlußelement (1) einer Luftbefüllungseinrichtung für Reifen eines Motorrades, PKW's od.dgl. mit einem Luftzuführungsrohr (2), das an einem Ende einen Griff (8) aufweist und an eine Luftzuführungsleitung (10) angeschlossen ist und das am anderen Ende mit einem zylindrischen Anschlußkopf (3) versehen ist, der eine axiale Aufnahmeöffnung (4) für das Ventil des Reifens enthält, soll gleichermaßen für Motorradreifen und für PKW-Reifen verwendbar sein. Dies wird erfindungsgemäß dadurch erreicht, daß eine Sicherungseinrichtung (7) mit einer Zunge (26), einem Betätigungshebel (5) und einem Federmittel (29) vorgesehen ist, wobei eine Drehachse (6) des Betätigungshebels (5) im Bereich des der Aufnahmeöffnung (4) abgewandten Endes am Anschlußkopf (3) angeordnet ist und der Betätigungshebel (5) im wesentlichen entlang des Luftzuführungsrohres (2) verläuft und über einen Bügel (27) mit der Zunge (26) verbunden ist, der im wesentlichen entlang des Anschlußkopfes (3) verläuft.

## Beschreibung

Die Erfindung betrifft ein Steckanschlußelement für eine Einrichtung zur Luftbefüllung von Reifen eines Motorrades, Pkw's oder dergleichen mit den Merkmalen des Oberbegriffes des Anspruchs 1.

Derartige Steckanschlußelemente werden hauptsächlich bei mobilen, tragbaren Einrichtungen zur Luftbefüllung, sogenannten Reifenfüllmessern verwendet, die beispielsweise an Servicestationen von Tankstellen zum Prüfen und Regulieren des Reifendruckes zur Verfügung stehen. Diese Reifenfüllmesser werden gleichermaßen bevorzugt zum Befüllen von Motorradreifen und Autoreifen verwendet.

Zwischen Motorradreifen und Autoreifen bestehen jedoch im Hinblick auf deren Luftbefüllung grundsätzliche Unterschiede. Während bei einem Motorradreifen das Ventil etwa in der Mittelebene des Reifens angeordnet ist und sich radial nach innen, zur Nabe hin erstreckt, ist bei einem Autoreifen das Ventil an einer Seite des Reifens angeordnet und verläuft schräg zu dessen Mittelebene.

Durch diese grundsätzlichen Unterschiede erhält man sich widersprechende Anforderungen an die Geometrie des Steckanschlußelementes. Bei einem Motorradreifen ist zwischen Ventil und Habe, zum Beispiel bei einer Trommelbremse, oftmals nur wenig Platz vorhanden. Deshalb ist ein Anschlußelement erwünscht, dessen Anschlußkopf etwa senkrecht zum Luftzuführungsrohr verläuft, damit das Ventil gut erreichbar ist. Dabei wird es bei einer derartigen Anordnung als Nachteil empfunden, daß der Anwender aufgrund der Hebelverhältnisse eine relativ große Kraft auf den Griff aufbringen muß, um das auf das Ventil aufgesteckte Steckanschlußelement bzw. dessen Anschlußkopf abgedichtet auf dem Ventil halten zu können.

Im Unterschied dazu ist das Ventil eines Autoreifens in der Regel in dessen Achsrichtung frei zugänglich, so daß für einen Autoreifen eine Anordnung bevorzugt wird, bei der die Längsachse des Anschlußkopfes etwa mit der Längsachse des Luftzuführungsrohres zusammenfällt. Auf diese Weise können von Hand leicht ausreichend große Kräfte auf den Anschlußkopf aufgebracht werden, die zum Aufrechthalten einer Abdichtung zwischen Ventil und Steckanschlußelement notwendig sind.

Da es aber unzweckmäßig und vor allem unwirtschaftlich ist, für Motorräder und für Kraftfahrzeuge separate Reifenfüllmesser zur Verfügung zu stellen, weisen die bekannten Einrichtungen zur Luftbefüllung jeweils ein Steckanschlußelement auf, das immer nur eine Kompromißlösung für die unterschiedlichen, sich widerstrebenden Anforderungen darstellt und weder für Motorradreifen noch für Pkw-Reifen eine optimale Lösung bietet.

Zum Beispiel weist ein bekanntes Steckanschlußelement einen s-förmig gebogenen Bereich auf, an dem der Anschlußkopf angebracht ist. Mit dieser Maßnahme ist beispielsweise das Ventil eines Motorradreifens auch im Bereich des Kettenkastens erreichbar. Jedoch ist es für die Befüllung von Autoreifen sehr schwierig, das Steckanschlußelement so am Ventil des Reifens anzubringen, daß auf Dauer ein dichter Anschluß aufrechtgehalten werden kann. Denn der Verwender muß dabei eine relativ hohe Kraft in einer ergonomisch ungünstigen Richtung aufbringen, so daß spätestens dann, wenn er sich auf die Druckanzeige und die Bedienung des Reifenfüllmeßgerätes konzentriert, die Richtung der Krafteinleitung nicht mehr mit der Achsrichtung des Ventils übereinstimmt und das regelmäßig nachgiebig am Reifen angeordnete Ventil ausweicht. Dadurch wird die Abdichtung erheblich gestört, so daß es zu einem (hörbaren) Entweichen der Luft aus dem Reifen in die Atmosphäre kommen kann. Auch beim Befüllen des Reifens kann dann ein wesentlicher Anteil der Fülluft in die Atmosphäre entweichen. Außerdem ist eine genaue Anzeige des Reifendruckes nicht mehr möglich, wenn während des Meßvorganges ein unbestimmter Druckverlust durch das Ventil stattfindet.

Ein anderes bekanntes Steckanschlußelement, das im Hobbybereich oder bei stationären Einrichtungen zur Reifenbefüllung verwendet wird, weist einen Anschlußkopf auf, der über ein kurzes Rohr an die Luftzuführungsleitung der Einrichtung angeschlossen ist. Außerdem weist der Anschlußkopf einen Hebel auf, bei dessen Betätigung eine Dichtung axial zusammengedrückt wird, wobei sie sich radial nach innen ausdehnt und sich ggf. an der Außenseite eines Ventils dicht anlegt. Bei einem derartigen Steckanschlußelement tritt eine große Abnutzung der Dichtung auf, da diese gegen ein relativ scharfkantiges Gewinde auf der Außenseite des Ventils angedrückt wird. Darüber hinaus verläuft der Hebel in seiner Freigabestellung in der Achse des Anschlußkopfes, so daß das Steckanschlußelement im Bereich des Anschlußkopfes eine große axiale Abmessung aufweist. Es ist daher bei Motorradreifen mit relativ wenig Raum zwischen Nabe und Ventil nicht verwendbar. Außerdem erfordert dieses Steckanschlußelement eine Bedienung mit zwei Händen. Da aber gerade bei Motorradreifen aufgrund des Kettenkastens, der Speichen etc. auch seitlich des Ventils oftmals nur wenig Raum zum Hantieren zur Verfügung steht, ist dieses bekannte Steckanschlußelement auch aus diesem Grund für viele Motorradtypen ungeeignet.

Bei einem anderen Steckanschlußelement, das nur bei stationären Luftbefüllungseinrichtungen zum Beispiel in Werkstätten verwendet wird, weist ein kugelförmiger Anschlußkopf ein kurzes Anschlußrohr für eine Luftzuführungsleitung auf. Außerdem ist am Anschlußkopf ein abschraubbares Trägerelement angeordnet, das eine zylindrische Aufnahmeöffnung und eine Sicherungseinrichtung enthält. Diese Sicherungseinrichtung weist eine Zunge auf, die in einem im Trägerelement und in der Aufnahmeöffnung eingebrachten Schlitz bezüglich der Aufnahmeöffnung radial zwischen einer Freigabestellung und einer Sicherungsstellung verstellbar ist, in der sie radial in die Aufnahmeöffnung hineinragt. Die Zunge ist an eine Blattfeder angeformt, die an einem am Trägerelement schwenkbar gelagerten Betätigungshebel befestigt ist. Aufgrund der vielen Einzelteile ist dieses bekannte Steckanschlußelement nur sehr aufwendig herzustellen.

Außerdem ragen die Ventile eines Autoreifens üblicherweise nicht über die seitliche Kontur des Reifens heraus; auch werden üblicherweise Radzierblenden auf einer Felge des Reifens montiert, die oftmals nur enge Öffnungen aufweisen, durch die das Ventil erreicht werden muß, so daß aus diesen Gründen seitlich vom Aufnahmebereich eines Steckanschlußelementes abstehende Bauteile einen Steckanschluß behindern oder diesen unmöglich machen. Da aber bei diesem bekannten Steckanschlußelement die Sicherungsmittel, insbesondere die Blattfeder und der Betätigungshebel seitlich bzw. radial am Trägerelement und somit radial abstehend zur Aufnahmeöffnung angeordnet sind, kann dieses Steckanschlußelement bei Autoreifen regelmäßig nicht verwendet werden, wenn Radzierblenden auf der Felge des Reifens montiert sind. Außerdem muß auch dieses Steckanschlußelement mit zwei Händen betätigt werden, so daß es auch für Motorradreifen mit engem Freiraum im Bereich des Ventils nicht verwendbar ist.

Die vorliegende Erfindung beschäftigt sich mit dem Problem, ein Steckanschlußelement der eingangs genannten Art derart auszugestalten, daß es sowohl für Motorradreifen als auch für Pkw-Reifen gleichermaßen gut verwendbar ist und jeweils eine hochwertige Abdichtung gewährleistet.

Erfindungsgemäß wird dieses Problem mit einem Steckanschlußelement mit den Merkmalen des Anspruches 1 gelöst.

Die Erfindung beruht auf dem allgemeinen Gedanken, einerseits die Verwendbarkeit des Steckanschlußelementes für Autoreifen zu verbessern, indem eine Sicherungseinrichtung vorgesehen wird, die das auf das Ventil aufgesteckte Steckanschlußelement am Ventil sicher hält. Auf diese Weise muß vom Verwender nur bei einem einmaligen Steckvorgang eine axial auf das Ventil ausgerichtete Kraft aufgebracht werden, durch die ein abgedichteter Anschluß erzielt wird. In dieser Position erfolgt dann die Sicherung, so daß die einmal erreichte dichte Verbindung für den gesamten Prüf- und Reguliervorgang (Befüllen oder Entlüften des Reifens) gewährleistet ist. Andererseits wird auch die Verwendbarkeit des Steckanschlußelementes für Motorradreifen verbessert, in dem der Anschlußkopf relativ geringe Abmessungen erhält, wobei die Elemente der Sicherungseinrichtung so angeordnet werden, daß zum einen diese geringen Abmessungen des Anschlußkopfes nur geringfügig verändert werden und zum anderen die manuelle Betätigung der Sicherung außerhalb des Anschlußkopfes und somit außerhalb der Ventilumgebung erfolgen kann.

Diese Maßnahmen haben zur Folge, daß Ventile auch in engsten Verhältnissen erreichbar sind, weshalb sich das erfindungsgemäße Steckanschlußelement insbesondere Autoreifen mit aufgesetzter Radzierblende und für Motorradreifen mit geringem Abstand zwischen Ventil und Nabe, Speichen, Kettenkasten, etc. verwenden läßt. Mit Hilfe der erfindungsgemäß vorgeschlagenen Anordnung der Drehachse des Betätigungshebels ergibt sich eine Geometrie, die eine ausreichende Verstellbewegung der Zunge schon bei relativ kleinen Verstellbewegungen des Betätigungshebels ermöglicht. Auf diese Weise bleibt der Betätigungshebel in beiden Endstellungen in der Nähe des Luftzuführungsrohres, so daß insbesondere das Luftzuführungsrohr durch den daran entlang verlaufenden Betätigungshebel nur geringfügig verbreitert wird.

Bei der erfindungsgemäß ausgestalteten Sicherungseinrichtung können der Betätigungshebel und der damit verbundene Bügel nach Art eines Doppelarmhebels ausgebildet sein, dessen Arme etwa senkrecht zueinander verlaufen.

Bei einer bevorzugten Ausführungsform mit den Merkmalen des Anspruchs 2 wird ein besonders einfacher und kompakter Aufbau des Steckanschlußelementes erreicht.

Die Merkmale des Anspruches 3 ermöglichen eine besonders einfache Konstruktion, bei der die Federmittel effizient eine Vorspannung auf den Betätigungshebel und somit auf die Zunge in deren Sicherungsstellung aufbringen können. Diese vorteilhafte, raumsparende Bauweise, bei der die Blattfeder im wesentlichen in der Längsrichtung des Rohres bzw. des Betätigungshebels verläuft, dient das Luftzuführungsrohr als Widerlager und wird dadurch in die Sicherungseinrichtung funktionell integriert.

Darüber hinaus kann entsprechend Anspruch 4 die Blattfeder so am Betätigungshebel angebracht werden, daß sie sich zwischen dem Griff und dem Betätigungshebel am Luftzuführungsrohr abstützt. Auf diese Weise erhält der Betätigungshebel in Verbindung mit der Blattfeder eine geschlossene Außenkontur, so daß beispielsweise eine Luftzuführungsleitung oder Kleidungsstücke nicht zwischen das Luftzuführungsrohr und den Betätigungshebel geraten können. Um die Außenkontur noch weiter abzuschließen, können sich die seitlich am Betätigungshebel angeordneten Wangen im wesentlichen über dessen gesamte Länge beiderseits des Luftzuführungsrohres erstrecken.

Eine besonders bevorzugte Ausführungsform kann die Merkmale des Anspruches 5 aufweisen, die eine Betätigung des erfindungsgemäßen Steckanschlußelementes mit nur einer Hand ermöglichen.

Bei einer Ausgestaltung des erfindungsgemäßen Steckanschlußelementes entsprechend den Merkmalen des Anspruches 7 wird eine besonders preiswerte Herstellung des Steckanschlußelementes ermöglicht, da einerseits weniger Einzelteile hergestellt und außerdem weniger Einzelteile montiert werden müssen.

Entsprechend Anspruch 8 kann der Anschlußkopf gegenüber dem Lufzuführungsrohr um einen Winkel geneigt verlaufen, der zwischen 95° und 115° liegt. Insbesondere kann dieser Winkel zwischen 100° und 110° liegen, bevorzugt wird jedoch ein Winkel von 105°. Diese Winkelmaße haben sich aus ergonomischen Gesichtspunkten unter Berücksichtigung der geometrischen Gegebenheiten bei Motorradreifen und bei Autoreifen als besonders günstig herausgestellt.

Bei einer Ausgestaltung kann das Steckanschlußelement die Merkmale des Anspruchs 9 aufweisen. Eine derartige Aufnahmehülse kann beispielsweise einfach in die Aufnahmeöffnung des Aufnahmekopfes eingesteckt sein oder mit einem Außengewinde versehen sein, das mit einem Innengewinde in der Aufnahmeöffnung zusammenwirkt. Die Ausbildung als separates Bauteil ermöglicht insbesondere die Herstellung der Aufnahmehülse und des übrigen Anschlußkopfes aus unterschiedlichen Werkstoffen. Darüber hinaus bietet diese Ausgestaltungsform weitere Vorteile. Zum Beispiel kann sie entsprechend Anspruch 10 so ausgebildet sein, daß die Stirnseite des Anschlußkopfes im Bereich seiner Aufnahmeöffnung von der Aufnahmehülse abgedeckt und somit geschützt ist. Außerdem kann die Aufnahmehülse entsprechend Anspruch 12 verschleißfest ausgebildet sein. Dazu kann sie insbesondere aus einem hochwertigen Werkstoff, zum Beispiel Stahl, hergestellt sein, der zusätzlich einem Härteverfahren unterzogen sein kann.

Weitere wesentliche Merkmale und Vorteile der Erfindung ergeben sich aus der nachfolgenden Beschreibung bevorzugter Ausführungsbeispiele. Es zeigen, jeweils schematisch,
- Fig. 1: eine Seitenansicht eines erfindungsgemäßen Steckanschlußelementes,
- Fig. 2: einen Längsschnitt durch einen vorderen Bereich des erfindungsgemäßen Steckanschlußelementes und
- Fig. 3: ein Längsschnitt durch den vorderen Bereich einer Variante des erfindungsgemäßen Steckanschlußelementes, wobei das Steckanschlußelement auf ein Ventil eines im übrigen nicht dargestellten Reifens aufgesteckt ist.

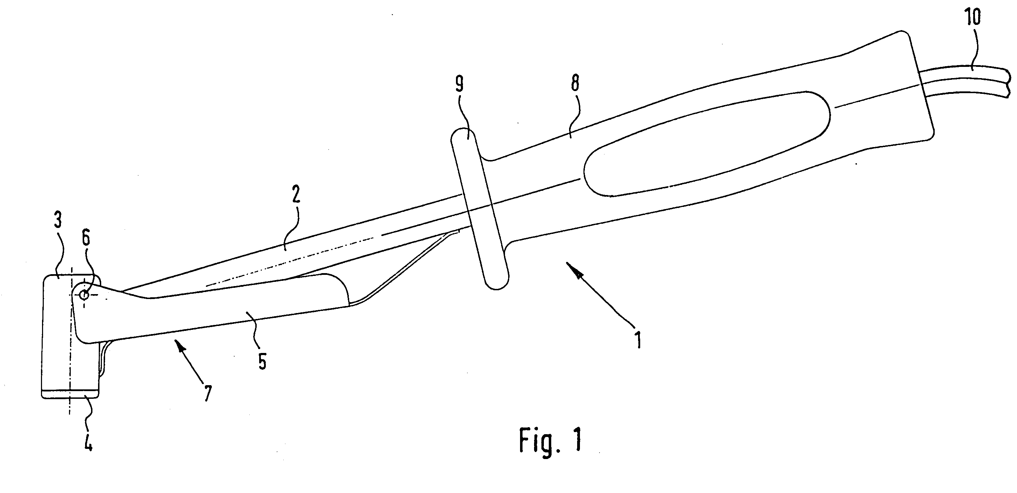

Entsprechend Fig. 1 weist ein erfindungsgemäßes Steckanschlußelement 1 ein Luftzuführungsrohr 2 auf, das an seinem vorderen Ende, entsprechend Fig. 1 links, mit einem Anschlußkopf 3 verbunden ist. Der Anschlußkopf 3 ist im wesentlichen zylindrisch ausgebildet und enthält an seinem entsprechend Fig. 1 unteren Ende eine Aufnahmehülse 4. An dem der Aufnahmehülse 4 gegenüberliegenden Ende des Anschlußkopfes 3 ist eine Drehachse 6 angeordnet, an der ein Betätigungshebel 5 schwenkbar gelagert ist. Die Drehachse 6 verläuft dabei senkrecht zur Längsachse des Anschlußkopfes 3 und senkrecht zur Längsachse des Luftzuführungsrohres 2. Der Betätigungshebel 5 gehört zu einer Sicherungseinrichtung 7, mit der das Steckanschlußelement 1, wenn es auf ein Ventil eines Reifens aufgesteckt ist, an diesem Ventil gesichert wird.

Am anderen, rechten Ende des Luftzuführungsrohres 2 ist ein Griff 8 angebracht, der von einer Hand des Verwenders umfaßt werden kann. An dem dem Anschlußkopf 3 zugewandten Ende des Griffes 8 ist eine Abschlußscheibe 9 angeordnet, die ein Abrutschen vom Griff 8 auch bei der Aufbringung größerer Kräfte in Längsrichtung des Steckanschlußelementes 1 verhindert. Ebenfalls am rechten axialen Ende des Luftzuführungsrohres 2 ist eine Luftzuführungsleitung 10 angeschlossen, die mit einer im übrigen nicht dargestellten insbesondere mobilen Einrichtung zur Luftbefüllung von Reifen eines Motorrades, Pkw's oder dergleichen verbunden ist.

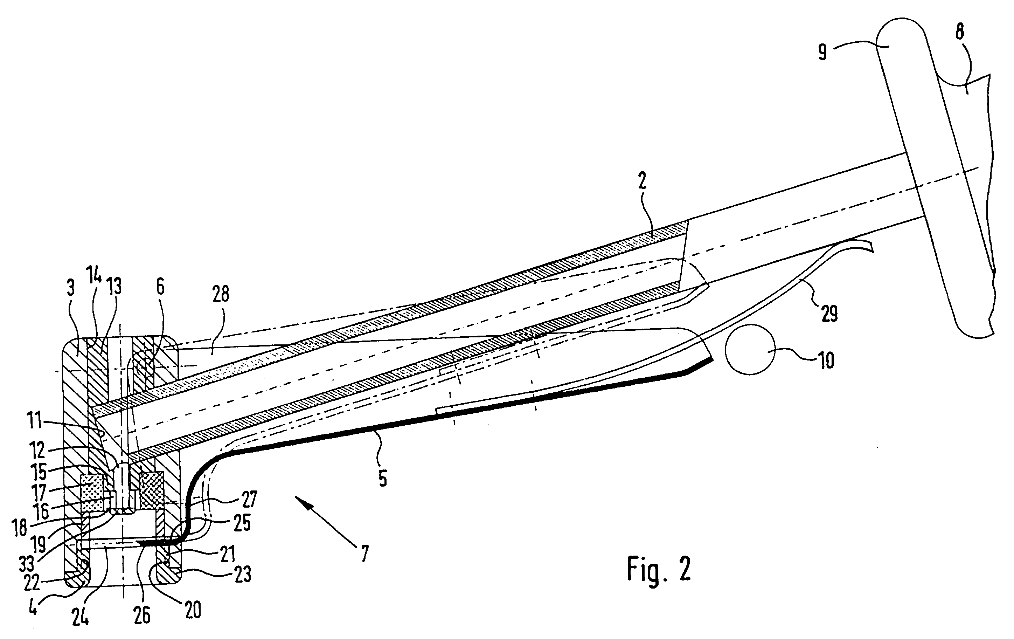

Entsprechend Fig. 2 ist das Luftzuführungsrohr 2 durch eine als Bohrung ausgebildete Öffnung 11 in den Anschlußkopf 3 eingebracht und beispielsweise durch Verlöten dicht damit verbunden. Dabei ist das in die Öffnung 11 eingebrachte stirnseitige Ende des Luftzuführungsrohres 2 abgeschrägt, so daß das Luftzuführungsrohr 2 mit einem in der Öffnung 11 mündenden Luftzuführungskanal 12 kommunizieren kann.

Dieser Luftzuführungskanal 12 ist in einer zylindrischen Buchse 13 vorgesehen, die in eine entsprechende Öffnung 14 im Anschlußkopf 3, insbesondere mit Preßsitz, abgedichtet eingebracht ist. Dabei wird der Luftzuführungskanal 12 vorzugsweise durch eine Bohrung in die Buchse 13 eingebracht.

Obwohl im weiteren immer von einem Luftzuführungsrohr, einem Luftzuführungskanal und einer Luftzuführungsleitung gesprochen wird, ist es selbstverständlich, daß in diesen Bauteilen Luft nicht nur zugeführt werden kann. Beispielsweise kann zur Regulierung des Reifenluftdruckes auch der Fall eintreten, daß Luft aus dem Reifen abgelassen werden muß, was dann ebenfalls durch die mit Luft-"Zuführung" bezeichneten Bauteile erfolgt.

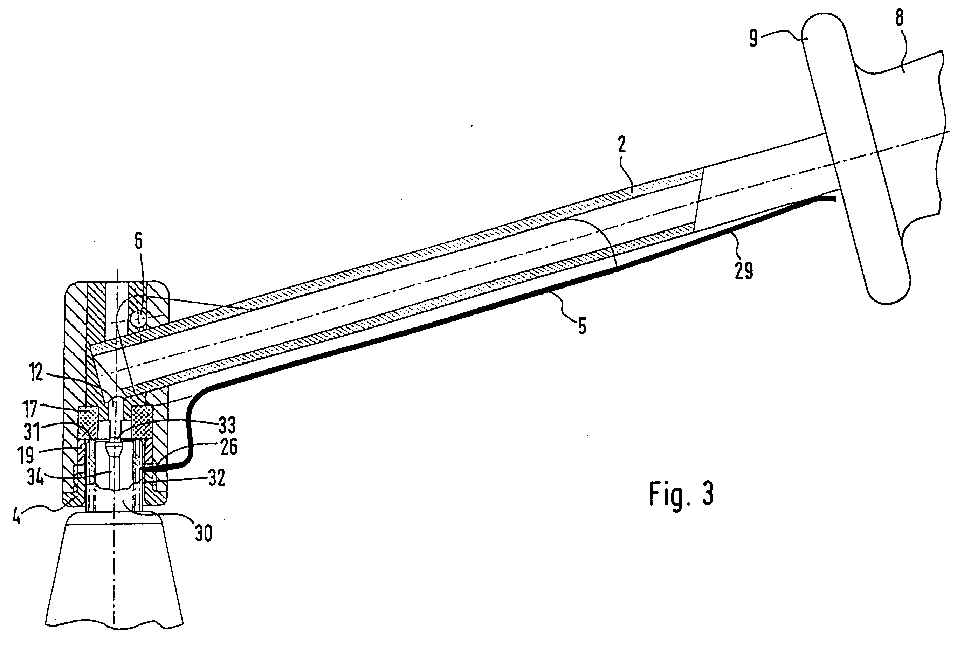

Die Buchse 13 ist an ihrem im Inneren des Anschlußkopfes 3 endenden Endbereich 15 abgestuft. Am axial freien Ende des Endbereiches 15 sind radiale Durchlaßöffnungen 16 vorgesehen, die mit dem Lufzuführungskanal 12 kommunizieren. Die radialen Durchlaßöffnungen 16 werden beispielsweise dadurch realisiert, daß das freie Ende des Endbereiches 15 an gegenüberliegenden Seiten abgeflacht und anschließend eine Bohrung in die abgeflachten Bereiche eingebracht wird. Dadurch werden die radialen Durchlaßöfnungen 16 kommunizierend mit dem Luftzuführungskanal 12 verbunden. (Entsprechend der Variante aus Fig. 3 können die gegenüberliegenden Seiten gleich soweit abgeflacht werden, daß sich schon durch den Abflachungsvorgang die radialen Durchlaßöffnungen 16 ausbilden.) Gleichzeitig wird durch die Abflachung zwischen den radialen Durchlaßöffnungen 16 und einem auf den Endbereich 15 aufgebrachten Dichtring 17 entsprechend Fig. 2 jeweils eine axiale Durchlaßöffnung 18 erzielt, wobei zwischen diesen ein u-förmig ausgebildeter Steg 33 am freien Ende des Endbereiches 15 verbleibt.

Die axialen Durchlaßöffnungen 18 münden im Inneren eines Stützringes 19, der an einer Stirnseite am Dichtring 17 zur Anlage kommt und diesen im Anschlußkopf 3 sichert.

Die Aufnahmehülse 4 ist mit einem Außengewinde 20 versehen, das mit einem korrespondierenden Innengewinde 21 zusammenwirkt, das in einer Aufnahmeöffnung 22 im Anschlußkopf 3 eingebracht ist, in der die Aufnahmehülse 4, der Stützring 19 und der Dichtring 17 angeordnet sind. Die Aufnahmehülse 4 weist an einem axialen Ende einen sich radial nach außen erstreckenden Kragen 23 auf, der entsprechend Fig. 2 im eingeschraubten Zustand der Aufnahmehülse 4 an der Stirnseite des Anschlußkopfes 3 zur Anlage kommt und bündig mit der Außenseite des Anschlußkopfes 3 abschließt. Die Aufnahmehülse 4 ist aus einem besonders verschleißfesten Material gefertigt, insbesondere aus einem gehärteten Stahl, so daß dieser Bereich des Anschlußkopfes 3, der üblicherweise den höchsten Beanspruchungen ausgesetzt ist, durch die Aufnahmehülse 4 geschützt ist und eine lange Lebenszeit aufweist.

Axial zwischen dem Stützring 19 und der Aufnahmehülse 4 ist ein Spalt 24 ausgebildet, in dem eine durch einen Schlitz 25 im Anschlußkopf 3 eingeführte Zunge 26 radial bezüglich der Längsachse des Anschlußkopfes 3 verstellbar ist.

Diese Zunge 26 ist ein weiterer Bestandteil der oben in Bezug auf Fig. 1 angesprochenen Sicherungseinrichtung 7. Die Zunge 26 ist an ihrem in das Innere der Aufnahmeöffnung 22 des Anschlußkopfes 3 hineinragenden Ende entsprechend einer Draufsicht in Richtung der Längsachse des Anschlußkopfes 3 kreisbogenförmig ausgebildet (was in der Ansicht entsprechend Fig. 2 jedoch nicht erkennbar ist). Außerdem ist das freie Ende der Zunge 26 zugespitzt, um einen möglichst effektiven Eingriff in ein Außengewinde eines Ventils erzielen zu können. Zusätzlich kann der Kreisbogen denselben Radius wie der Gewindegrund des Ventilaußengewindes aufweisen.

An ihrem dem zugespitzten freien Ende gegenüberliegenden Ende ist die Zunge 26 außerhalb des Anschlußkopfes 3 mit einem Bügel 27 verbunden, der nahe am Anschlußkopf 3 im wesentlichen parallel zu diesem verläuft und im Bereich des Überganges zwischen Anschlußkopf 3 und Luftzuführungsrohr 2 mit dem Betätigungshebel 5 verbunden ist.

Der Betätigungshebel 5 weist zwei parallel zueinander verlaufende Seitenwangen 28 auf, die sich beiderseits des Luftzuführungsrohres 2 längserstrecken und mit denen der Betätigungshebel 5 an der Drehachse 6 gelagert ist. Auf diese Weise kann der Lagerungspunkt an dem der Aufnahmeöffnung 22 gegenüberliegenden Ende des Anschlußkopfes 3 vorgesehen werden, wodurch sich ein möglichst großer Hebelarm zwischen Zunge 26 und Drehachse 6 erzielen läßt. Damit reichen relativ kleine Drehbewegungen des Betätigungshebels 5 aus, um die Zunge 26 zwischen einer mit durchgezogenen Linien dargestellten Sicherungsstellung und einer mit strichpunktierten Linien dargestellten Freigabestellung zu verstellen.

Sowohl in der Sicherungsstellung als auch in der Freigabestellung ragt die Zunge 26 soweit in die Aufnahmeöffnung 22 hinein, daß sie die Stirnseite des Stützringes 19 im Bereich des Schlitzes 25 übergreift. Auf diese Weise wird der Stützring 19 durch die Sicherungseinrichtung 7 im Anschlußkopf 3 gesichert, so daß der Stützring 19 relativ lose in der Aufnahmeöffnung 22 untergebracht sein kann, wodurch z.B. ein Austausch des Dichtringes 17 vereinfacht ist.

In dem in Fig. 2 dargestellten Ausführungsbeispiel ist am Betätigungshebel 5 zwischen seinen Seitenwangen 28 auf der dem Luftzuführungsrohr 2 zugewandten Seite eine Blattfeder 29 befestigt, die sich am Luftzuführungsrohr 2 in der Nähe der Abschlußscheibe 9 des Griffes 8 abstützt. Auf diese Weise bildet die Sicherungseinrichtung 7 eine bezüglich des Luftzuführungsrohres 2 geschlossene Außenkontur, so daß insbesondere die Luftzuführungsleitung 10, deren Querschnitt in Fig. 2 als Kreis symbolisiert ist, nicht in den Raum zwischen Betätigungshebel 5 und Luftzuführungsrohr 2 gelangen kann, wo sie die Betätigung der Sicherungseinrichtung 7 behindern könnte.

Die Länge des Luftzuführungsrohres 2, die Länge des Betätigungshebels 5 und die Anordnung des Griffes 8 sind so gewählt, daß ein Verwender, der mit einer Hand den Griff 8 umschließt, mit seinem Daumen oder Zeigefinger den Betätigungshebel 5 betätigen kann. Dabei drückt er den Betätigungshebel 5 gegen das Luftzuführungsrohr 2, das gleichzeitig als Anschlag wirkt und die Schwenkbewegung in einer maximalen Öffnungsposition begrenzt.

Entsprechend Fig. 3 kann dann ein Ventil 30 eines im übrigen nicht dargestellten Reifens eines Motorrades oder Pkw's oder dergleichen in die Aufnahmehülse 4 eingeschoben werden bzw. das Steckanschlußelement 1 bzw. dessen Aufnahmehülse 4 wird auf das Ventil 30 aufgesteckt. Dabei sind vorzugsweise die Aufnahmehülse 4 und der Stützring 19 jeweils mit einem Innendurchmesser versehen, der nur geringfügig größer ist als der Außendurchmesser des Ventils 30, so daß der Anschlußkopf 3 nur mit geringem Spiel auf das Ventil 30 aufsteckbar ist. Auf diese Weise bildet sich eine axiale Führung aus, die das Ventil 30 in axialer Richtung ausrichtet und somit an einer Stirnseite 31 des Ventils 30 eine definierte Dichtfläche vorgibt, die axial an dem Dichtring 17 zur Anlage kommt. Durch diese axiale Führung wird eine optimal abgedichtete Verbindung zwischen dem Ventilinnenraum und dem Luftzuführungskanal 12 erzielt. Bei der in Fig. 3 dargestellten Sicherungsstellung der Sicherungseinrichtung 7 greift die Zunge 26 in ein Außengewinde 32 des Ventils 30 ein, so daß das Steckanschlußelement 1 in axialer Richtung am Ventil 30 gesichert gehalten ist.

Darüber hinaus wird durch die Vorspannung des Betätigungshebels 5, aufgrund der Blattfeder 29, die Zunge 26 gegen das Ventil 30 und somit das Ventil 30 gegen die der Zunge 26 gegenüberliegende Innenseite der Aufnahmehülse 4 und des Halteringes 19 angedrückt, so daß eine zusätzliche Ausrichtung des Ventils 30 und somit der Dichtfläche an der Stirnseite 31 erfolgt.

Bei den gezeigten Ausführungsbeispielen weist der Stützring 19 die gleichen Innenmaße wie die Aufnahmehülse 4 auf, so daß dieser die Führung zusammen mit der Aufnahmehülse 4 ausbildet. Die Aufnahmehülse 4 kann aber auch in einer nicht gezeigten Ausführungsform derart ausgebildet sein, daß sie sich bis zum Dichtring 17 erstreckt und die Halte- bzw. Sicherungsfunktion des Stützringes 19 übernimmt, der dann entfällt. Eine auf diese Weise ausgebildete Aufnahmehülse 4 ist dann in entsprechender Weise mit einem Schlitz 25 versehen, in dem die Zunge 26 verstellbar ist.

Der bei der Ausbildung der radialen Durchlaßöffnungen 16 und der axialen Durchlaßöffnungen 18 am Endbereich 15 der Buchse 13 zwischen den axialen Durchlaßöffnungen 18 ein in einer Seitenansicht in der Zeichenebene etwa u-förmig ausgebildete Steg 33, dient beim Aufstecken des Anschlußkopfes 3 auf das Ventil 30 als Dorn und drückt gegen einen Ventilstößel 34, wobei sich das Ventil 30 öffnet.

Bei besonders bevorzugten Ausführungsformen des erfindungsgemäßen Steckanschlußelementes 1 weist der Dichtring 17 zum einen eine relativ große axiale Erstreckung auf und ist zum anderen aus einem Werkstoff mit relativ geringem Härtegrad gebildet, so daß beim Aufstecken des Anschlußkopfes 3 der Dichtring 17 in axialer Richtung zusammengedrückt werden kann. Vorzugsweise erfolgt dann in dieser zusammengedrückten, vorgespannten Position die Sicherung durch die Zunge 26. Diese Maßnahmen bewirken eine nochmals verstärkte Abdichtung an der Stirnseite 31 des Ventils 30.

Im Unterschied zu dem Ausführungsbeispiel entsprechend Fig. 2 kann bei dem in Fig. 3 gezeigten Ausführungsbeispiel die Feder 29 am Betätigungshebel 5 angeformt sein. Insbesondere können die Zunge 26, der Bügel 27, der Betätigungshebel 5, die Seitenwangen 28 und die Blattfeder 29 als einteiliges Bauteil geformt sein. Die komplette Sicherungseinrichtung 7 besteht dann nur aus diesem einen Bauteil und der Drehachse 6, wobei im Anschlußkopf 3 lediglich der Schlitz 25 und eine Bohrung oder Lagerung für die Drehachse 6 vorgesehen werden müssen.

## Patentansprüche

1. Steckanschlußelement für eine Einrichtung zur Luftbefüllung von Reifen eines Motorrades, Pkw's oder dergleichen mit einem Luftzuführungsrohr, das an einem Ende einen Griff aufweist und an eine Luftzuführungsleitung der Einrichtung angeschlossen ist und das am anderen Ende mit einem zylindrischen Anschlußkopf versehen ist, der eine axiale Aufnahmeöffnung für ein Ventil des Reifens enthält,
**dadurch gekennzeichnet,**
daß eine Sicherungseinrichtung (7) vorgesehen ist, die beim Anschließen des Steckanschlußelementes (1) an das Ventil (30) mit einem Außengewinde (32) des Ventils (30) zusammenwirkt und das Steckanschlußelement (1) am Ventil (30) sichert, mit einer Zunge (26), die zwischen einer Sicherungsstellung, in der sich die Zunge (26) radial in die Aufnahmeöffnung (22) erstreckt, und einer Freigabestellung radial verstellbar ist, mit einem Betätigungshebel (5), der an einer quer zur Längsachse des Anschlußkopfes (3) und quer zur Längsachse des Luftzuführungsrohres (2) verlaufenden Drehachse (6) schwenkbar gelagert ist und zum Verstellen der Zunge (26) mit dieser zusammenwirkt, sowie mit einem Federmittel (29), das die Sicherungseinrichtung (7) in die Sicherungsstellung vorspannt, wobei die Drehachse (6) im Bereich des der Aufnahmeöffnung (22) abgewandten Endes am Anschlußkopf (3) angeordnet ist und der Betätigungshebel (5) im wesentlichen entlang des Luftzuführungsrohres (2) verläuft und über einen Bügel (27) mit der Zunge (26) verbunden ist, der im wesentlichen entlang des Anschlußkopfes (3) verläuft.

2. Steckanschlußelement nach Anspruch 1,
**dadurch gekennzeichnet,**
daß der Betätigungshebel (5) entlang der der Aufnahmeöffnung (22) zugewandten Seite des Luftzuführungsrohres (2) verläuft, wobei der Betätigungshebel (5) beiderseits des Luftzuführungsrohres (2) verlaufende Wangen (28) aufweist, mit denen er an der Drehachse (6) angelenkt ist.

3. Steckanschlußelement nach Anspruch 1 oder 2,
**dadurch gekennzeichnet,**
daß die Federmittel als Blattfeder (29) ausgebildet sind, die am Betätigungshebel (5) angebracht ist und sich am Luftzuführungsrohr (2) abstützt.

4. Steckanschlußelement nach Anspruch 3,
**dadurch gekennzeichnet,**
daß sich die Blattfeder (29) zwischen Betätigungshebel (5) und Griff (8) am Luftzuführungsrohr (2) abstützt.

5. Steckanschlußelement nach einem der vorhergehenden Ansprüche,
**dadurch gekennzeichnet,**
daß das Luftzuführungsrohr (2) und der Betätigungshebel (5) so bemessen sind, daß der Betätigungshebel (5) mit einem Finger einer am Griff (8) angreifenden Hand betätigbar ist.

6. Steckanschlußelement nach einem der vorhergehenden Ansprüche,
**dadurch gekennzeichnet,**
daß die Zunge (26) in einem Schlitz (25) verstellbar ist, der im Anschlußkopf (3) im Bereich der Aufnahmeöffnung (22), insbesondere mittig zur Aufnahmeöffnung (22) angeordnet ist.

7. Steckanschlußelement nach einem der vorhergehenden Ansprüche,
**dadurch gekennzeichnet,**
daß die Zunge (26), der Bügel (27), und der Betätigungshebel (5) und insbesondere die Blattfeder (29) einteilig ausgebildet sind.

8. Steckanschlußelement nach einem der vorhergehenden Ansprüche,
**dadurch gekennzeichnet,**
daß die Längsachse des Anschlußkopfes (3) mit der Längsachse des Luftzuführungsrohres (2) einen Winkel zwischen 95° - 115°, insbesondere zwischen 100° - 110° und vorzugsweise von 105°, einschließt.

9. Steckanschlußelement nach einem der vorhergehenden Ansprüche,
**dadurch gekennzeichnet,**
daß in der Aufnahmeöffnung (22) eine Aufnahmehülse (4) angeordnet ist.

10. Steckanschlußelement nach Anspruch 9,
**dadurch gekennzeichnet,**
daß die Aufnahmehülse (4) an einem axialen Ende einen sich radial nach außen erstreckenden Kragen (23) aufweist, der axial an der Stirnseite des Anschlußkopfes (3) zur Anlage kommt und radial mit der Außenseite des Anschlußkopfes (3) abschließt, wenn die Aufnahmehülse (4) in die Aufnahmeöffnung (22) eingebracht ist.

11. Steckanschlußelement nach Anspruch 9 oder 10,
**dadurch gekennzeichnet,**
daß sich die Aufnahmehülse (4) in axialer Richtung bis zum Schlitz (25) erstreckt, wenn sie in die Aufnahmeöffnung (22) eingebracht ist.

12. Steckanschlußelement nach einem der Ansprüche 9 bis 11,
**dadurch gekennzeichnet,**
daß die Aufnahmehülse (4) verschleißfest ausgebildet ist.

13. Steckanschlußelement nach einem der vorhergehenden Ansprüche,
**dadurch gekennzeichnet,**
daß ein axial wirkender Dichtring (17) in der Aufnahmeöffnung (22) des Anschlußkopfes (3) angeordnet ist.

14. Steckanschlußelement nach Anspruch 13,
**dadurch gekennzeichnet,**
daß der Dichtring (17) in der Aufnahmeöffnung (22) durch einen Stützring (19) gehalten ist, der sich in axialer Richtung bis zum Schlitz (25) erstreckt.

15. Steckanschlußelement nach Anspruch 14,
**dadurch gekennzeichnet,**
daß die Sicherungseinrichtung (7) derart bemessen ist, daß die Zunge (26) auch in der Freigabestellung den Stützring (19) sichernd übergreift.
